# FASCICULE DE BREVET EUROPEEN

(11) **EP 2 198 123 B1**
(45) Date de publication et mention de la délivrance du brevet: **11.07.2018**
(21) Numéro de dépôt: 08839399.6
(22) Date de dépôt: 24.09.2008
(51) Int. Cl.: E21B 43/36, B01D 19/00

(54) **DISPOSITIF DE SEPARATION LIQUIDE/GAZ HORIZONTAL, PROCEDE DE SEPARATION, NOTAMMENT DES PHASES LIQUIDE ET GAZEUSE D'UN PETROLE BRUT ET INSTALLATION DU DISPOSITIF SUR FOND MARIN**
HORIZONTALE FLÜSSIGKEITS-/GASTRENNUNGSVORRICHTUNG, FLÜSSIGKEITS-/GASTRENNUNGSVERFAHREN, INSBESONDERE FÜR ROHÖL-FLÜSSIG- UND GASPHASEN UND AUFSTELLUNG DER VORRICHTUNG AUF DEN SEEBODEN
HORIZONTAL LIQUID/GAS SEPARATION DEVICE, SEPARATION METHOD, INTENDED IN PARTICULAR FOR THE LIQUID AND GAS PHASES OF CRUDE OIL AND INSTALLATION OF THE DEVICE ON THE SEA GROUND

(30) Priorité: 09.10.2007 FR 0758164
(43) Date de publication de la demande: 23.06.2010
(73) Titulaire: Saipem SA, 78180 Montigny-le-Bretonneux (FR)
(72) Inventeur: MIOTTO, Giorgio, IT-20085 Milan (IT); CHIAROTTI, Massimo, IT-20097 San Donato Milanese(MI) (IT)
(74) Mandataire: Domange, Maxime
(86) Numéro de dépôt international: PCT/FR2008/051702
(87) Numéro de publication internationale: WO 2009/050367

(56) Documents cités:
- EP-A- 1 352 679
- WO-A-2006/058000
- WO-A-2007/071664
- RU-C1- 2 134 607
- SU-A1- 969 282
- US-A- 1 559 115

## Description

La présente invention a pour objet un séparateur liquide/gaz de type horizontal ainsi qu'un procédé de séparation de fluide polyphasique, notamment d'huile-eau et de gaz contenus dans du pétrole brut.

Le secteur technique de l'invention est plus particulièrement le domaine de la production pétrolière, et plus particulièrement le domaine des champs de pétrole en mer par grande profondeur.

La production de pétrole en mer profonde est réalisée en général à partir d'un support flottant ancré à proximité des puits de pétrole situés au niveau du fond de la mer, c'est-à-dire à des profondeurs variables de 1000 à 2500m, voire plus. Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" (signifiant "moyen flottant de stockage, de production et de déchargement") dont on utilise le terme abrégé "FPSO" dans l'ensemble de la description suivante.

Les têtes de puits sont en général reliées audit FPSO par des conduites sous-marines soit de type SCR, c'est-à-dire conduites suspendues en configuration de chaînette, soit de type tour hybride comprenant :
- un riser vertical dont l'extrémité inférieure est ancrée au fond de la mer et relié à une dite conduite reposant au fond de la mer, et l'extrémité supérieure est tendue par un flotteur immergé en subsurface auquel elle est reliée, et
- une conduite de liaison, en général une conduite de liaison flexible, entre l'extrémité supérieure dudit riser et un support flottant en surface, ladite conduite de liaison flexible prenant, le cas échéant, de par son propre poids la forme d'une courbe en chaînette plongeante, c'est-à-dire descendant largement en dessous du flotteur pour remonter ensuite jusqu'audit support flottant.

L'intégralité de la production de pétrole brut est ainsi en général remontée à bord du FPSO pour y être traitée en vue de séparer le pétrole proprement dit, de l'eau, du gaz, et d'éventuels composants sablonneux. Le pétrole, une fois séparé, est ainsi stocké à bord, le gaz est lavé, puis envoyé vers les turbines à gaz pour la production de l'électricité et de la chaleur nécessaire à bord, puis le surplus est réinjecté dans le réservoir du champ pétrolier de manière à remettre en pression ledit réservoir. L'eau, après avoir été libérée du sable en suspension, est enfin soit rejetée à la mer après extraction poussée de toute particule d'huile, soit réinjectée elle aussi dans le réservoir, un complément d'eau de mer prélevé en sub-surface, venant en général en complément, pour atteindre le débit nécessaire d'injection d'eau dans le réservoir. Le sable extrait, qui ne représente que des quantités minimes, est finalement lavé puis rejeté en mer.

On connaît la méthode de séparation des gaz, eau et huile de pétrole brut couramment employée sur les installations fixes à terre qui consiste à utiliser de réservoirs de très grands volumes, en général de forme cylindrique allongée, le pétrole brut entrant à une extrémité et cheminant le long dudit réservoir pendant une durée de l'ordre de 5-10 mn durant lesquelles les diverses phases se séparent naturellement par gravité pour atteindre la seconde extrémité. Le gaz est alors récupéré en partie haute du réservoir, l'eau et le sable en partie basse, et le pétrole (huile) en partie intermédiaire. Il existe une très grande variété de séparateurs de ce type qui intègrent en général des dispositifs complémentaires internes, tels des écrans horizontaux, verticaux ou obliques, dont l'objet est de faciliter la séparation des phases et éviter qu'ils ne se re-mélangent à une étape ultérieure.

Ces séparateurs fonctionnent à basse pression, par exemple 3-10 bars, parfois même en dépression, de manière à optimiser le dégazage du pétrole brut. Si l'on souhaite installer ce type de séparateur au fond de la mer, le réservoir doit être capable de résister à l'implosion sous l'effet de la pression qui est sensiblement de 100 bars, soit sensiblement 10MPa par tranche de 1000m d'eau. Ainsi la transposition d'un tel réservoir pour son utilisation en grande et très grande profondeur nécessiterait des épaisseurs de paroi de 100 à 150mm pour résister à l'implosion et de tels éléments de chaudronnerie seraient très délicats et très coûteux à réaliser et à installer au fond de la mer. Les documents RU2134607 et US1559115 décrivent chacun un dispositif de séparation gaz/liquide notamment de pétrole au moyen de conduites divergentes par rapport à l'horizontale.

Un but de la présente invention est de fournir un dispositif sous-marin de séparation gaz/liquide amélioré apte à être installé et fonctionner au fond de la mer à grande profondeur, notamment au moins 1000m, qui soit plus simple et moins coûteux à réaliser, installer et mettre en oeuvre au fond de la mer.

Pour ce faire, la présente invention, selon un premier aspect, fournit un dispositif de séparation liquide/gaz de deux phases respectivement liquide et gazeuse d'un fluide, notamment les phases liquide et gazeuse d'un pétrole brut, comprenant un bâti reposant au fond de la mer, supportant:
a) au moins une, de préférence une pluralité de premières conduites de séparation s'étendant depuis un premier réservoir diffuseur cylindrique de forme allongée à section circulaire disposé horizontalement auquel elles sont reliées en amont,le dit premier réservoir étant de préférence de plus grand diamètre que les dites premières conduites de séparation, lesdites premières conduites de séparation étant inclinées d'un angle α de 1 à 5° par rapport à l'horizontal avec une faible pente descendante depuis le dit premier réservoir vers un premier collecteur cylindrique sensiblement horizontal et auquel les dites premières conduites sont reliées en aval,ledit premier réservoir diffuseur étant alimenté par au moins une conduite d'alimentation de fluide, et le dit premier collecteur étant relié à au moins une première conduite d'évacuation de liquide en pente descendante et, de préférence, comprenant en aval une pompe d'export apte à soutirer ledit liquide dégazé du dit premier collecteur, et
b) au moins une, de préférence une pluralité de deuxièmes conduites de séparation disposées au dessus des dites premières conduites, s'étendant depuis et au dessus dudit premier réservoir avec une faible pente montante depuis ledit premier réservoir vers un deuxième collecteur cylindrique sensiblement horizontal, lesdites deuxièmes conduites de séparation étant inclinées d'un angle β supérieur à a, de préférence inférieur à 10° par rapport à l'horizontal, ledit deuxième collecteur étant de préférence de plus grand diamètre que les dites deuxièmes conduites et de plus petit diamètre que le dit premier réservoir,le dit deuxième collecteur étant relié à au moins une première conduite d'évacuation de gaz , de préférence en pente montante depuis ledit deuxième collecteur jusqu'à l'extrémité d'une deuxième conduite d'évacuation de gaz, ladite première conduite d'évacuation de gaz étant inclinée d'un angle γ supérieur à a, de préférence inférieur à 10°, et
c) une pluralité de troisièmes conduites de liaison verticale entre chaque dite première conduite de séparation et chaque dite deuxième conduite de séparation, et
d) un système de vérins, de préférence hydraulique, permettant l'ajustement précis de l'inclinaison desdites première et deuxième conduites de séparation, et du positionnement horizontal dudit premier réservoir et desdits premier et deuxième collecteurs.

On comprend donc que lesdites premières et deuxièmes conduites de séparation sont montées sur lesdits premiers réservoirs et premiers et deuxièmes collecteurs de telle sorte qu'elles présentent une faible inclinaison donnée par rapport à un plan horizontal, lorsque lesdits premiers réservoirs et premiers et deuxièmes collecteurs ont leurs axes disposés horizontalement.

L'inclinaison des dites premières conduites de séparation par rapport aux dites deuxièmes conduites de séparation est constante (β + α = constante) ; et du fait que lesdites premières et deuxièmes conduites sont inclinées en sens opposés par rapport à l'horizontal, la diminution de l'inclinaison des premières conduites entraine l'augmentation de celle des deuxièmes conduites et vice versa, α et β variant en sens inverse. De même l'inclinaison des dites premières conduites d'évacuation de gaz par rapport aux premières et deuxièmes conduites de séparation est constante, et l'inclinaison γ des dites premières conduites d'évacuation de gaz par rapport à l'horizontale varie dans le même sens que celle des dites premières conduites de séparation.

Selon un deuxième aspect, la présente invention fournit un procédé de séparation des deux phases liquide et gazeuse d'un fluide à l'aide d'un dispositif sous-marin de séparation selon l'invention dans lequel on réalise les étapes suivantes, dans lesquelles :
1) on envoie le fluide, de préférence du pétrole brut, par l'intermédiaire d'une conduite d'alimentation en fluide, jusqu'audit premier réservoir, et
2) la phase liquide en partie dégazé au moins s'écoule depuis ledit premier réservoir, à travers lesdites premières conduites de séparation pour être dégazé plus avant et descendre vers le dit premier collecteur, puis ladite première conduite d'évacuation de liquide, et
3) la phase gazeuse comprenant encore éventuellement du liquide s'élève et circule depuis ledit premier réservoir, à travers lesdites deuxièmes conduites de séparation vers le dit deuxième collecteur, puis ladite première conduite d'évacuation de gaz pour permettre la séparation complémentaire de liquide résiduel éventuellement encore contenu dans la dite phase gazeuse avant d'être évacuée dans la dite deuxième conduite d'évacuation, et
4) la phase gazeuse provenant de la première conduite de séparation s'élève à travers lesdites troisièmes conduites de liaison verticale et circule à travers lesdites deuxièmes conduites de séparation vers ledit deuxième collecteur puis vers lesdites première et dite deuxième conduite d'évacuation de gaz, et
5) la phase liquide provenant de la séparation du gaz dans lesdites deuxièmes conduites de séparation et dit deuxième collecteur et dite première conduite d'évacuation de gaz s'écoule vers ledit premier collecteur le cas échéant en passant par ledit premier réservoir ou lesdites troisièmes conduites de liaison verticales, avant de rejoindre ladite première conduite d'évacuation de liquide.
6) on récupère la phase liquide substantiellement dégazée à l'extrémité inférieure de ladite première conduite d'évacuation de liquide et on l'achemine, par l'intermédiaire d'une dite deuxième conduite d'évacuation de liquide que l'on remonte jusqu'en surface ou que l'on envoie vers un dispositif de séparation liquide de façon à séparer les différents liquides éventuellement γ contenus, de préférence pour séparer l'huile et l'eau d'un pétrole dégazé, et le cas échéant, un reliquat de gaz encore présent dans un pétrole brut imparfaitement dégazé, et
7) on récupère la phase gazeuse substantiellement séparée dudit liquide à l'extrémité inférieure de ladite deuxième conduite d'évacuation de gaz et de préférence on la renvoie en surface ou dans un puits d'injection de gaz au fond de la mer via une dite troisième conduite d'évacuation de gaz.

On comprend que le flux de pétrole brut remplissant le premier réservoir permet un premier dégazage dans ledit premier réservoir. Puis, le fluide partiellement dégazé s'écoulant à l'intérieur des première conduite et premier collecteur, permet un dégazage complémentaire.

La division du flux de fluide, depuis ledit premier réservoir jusqu'à la pluralité desdites premières conduites pour la phase liquide et pluralité de deuxièmes conduites pour la phase gazeuse, permet de compléter la séparation du fluide car il s'écoule à débit et vitesse réduits sur une plus grande surface de contact dans lesdites premières et deuxièmes conduites ce qui favorise la séparation.

On comprend que les faibles pentes des dites premières et deuxièmes conduites de séparation et deuxième conduite d'évacuation permettent de ralentir l'écoulement du fluide pour favoriser le dégazage du fluide et ralentir la circulation des gaz pour favoriser la condensation et séparation éventuelle des liquides qu'ils peuvent contenir encore. En particulier les pentes des dites premières et deuxièmes conduites de séparation permettent l'écoulement lent du fluide partiellement dégazé vers le premier collecteur et du fluide condensé provenant des gaz vers le premier réservoir, la pente ascendante de la conduite d'évacuation de gaz permettant au fluide provenant du gaz γ circulant de retomber dans le deuxième collecteur puis premier réservoir ou premier collecteur via les dites troisièmes conduites de liaison verticale , puis les deuxièmes conduites de séparation , puis enfin la première conduite d'évacuation de liquide.

L'ajustement précis de l'horizontalité desdits premier réservoir et premiers et deuxièmes collecteurs, permet de répartir de manière sensiblement uniforme le pétrole brut en provenance du premier réservoir diffuseur, entre les différentes premières conduites. D'autre part, l'ajustement précis de l'inclinaison desdites premières conduites de séparation, permet d'optimiser le rendement de séparation dudit séparateur en fonction des caractéristiques physico-chimiques du pétrole brut entrant. En effet, un pétrole de forte viscosité nécessitera une pente importante desdites premières conduites, alors qu'un pétrole de faible viscosité nécessitera une pente faible, voire très faible, pour que le pétrole brut progresse plus lentement dans lesdites premières conduites et ainsi puisse rester un temps suffisant dans la zone active propre au dégazage, constituée par le premier collecteur, par les premières conduites et par le deuxième collecteur. La viscosité du pétrole à traiter dépend entre autres de sa composition et/ou du pourcentage de gaz et/ou d'eau qu'il contient et peut donc varier dans le temps. En particulier, la viscosité peut diminuer si les teneurs en eau augmentent, ce qui est en général le cas au cours du temps. Une diminution de la viscosité requiert une diminution de l'inclinaison des premières conduites de séparation et premières conduites d'évacuation de gaz et concomitamment une augmentation de l'inclinaison des deuxièmes conduites de séparation, et inversement.

Lesdits réservoir et collecteurs cylindriques sont plus précisément de préférence de type cigare avec une partie courante cylindrique et des extrémités forme de calotte sphérique partielle, pour résister de manière optimale à la pression du milieu ambiant qui est sensiblement de 100 bars, soit 10 MPa, pour 1000m de profondeur d'eau.

De préférence, lesdites deuxièmes conduites de séparation sont reliées en amont audit premier réservoir respectivement par une pluralité de deuxièmes conduites de liaison de plus grande pente que lesdites deuxièmes conduites de séparation de préférence sensiblement verticales.

De préférence encore, lesdits premier réservoir et premier et deuxième collecteurs sont sensiblement parallèles, et lesdites premières et deuxièmes conduites de séparation s'étendent sensiblement dans une même direction sensiblement perpendiculaire à la direction longitudinale desdits premier réservoir et dits premier et deuxième collecteurs.

Avantageusement, le dispositif selon l'invention comprend, en aval dudit premier réservoir à l'extrémité amont desdites premières conduites de séparation, des dispositifs de contrôle du débit du transfert de fluide par perte de charge, de préférence de type cyclone à entrée tangentielle sensiblement perpendiculaire à la direction axiale desdites premières conduites de séparation, et à sortie axiale sensiblement dans l'axe desdites premières conduites.

Cette configuration de la liaison entre lesdits premier réservoir et premières conduites, permet d'atténuer les perturbations éventuelles du débit de fluide et de favoriser la séparation des gaz résiduels au sein desdits deuxièmes réservoirs.

Plus particulièrement, ces dispositifs de contrôle de débit de transfert par perte de charge permettent en fait d'atténuer et d'uniformiser les débits de fluide s'écoulant à l'intérieur des différentes dites premières conduites, compte tenu des régimes instables, perturbateurs, pouvant résulter des éclatements de bulles ou poches de gaz, lors de leur dégazage au sein dudit fluide brut à l'intérieur dudit premier réservoir

Avantageusement, le dispositif comprend un bâti constitué d'une armature de poutres supportant lesdites première et deuxième conduites, dit premier réservoir et dits premier et deuxième collecteurs, le dit bâti comprenant :
- au moins un premier pilier vertical comprenant à son extrémité inférieure un premier châssis supportant des parties de connecteurs automatiques connectés auxdites conduite d'alimentation de fluide, première conduite d'évacuation de fluide et deuxième conduite d'évacuation de gaz, ledit châssis étant apte à coopérer en fixation avec et sur une première embase ancrée au fond de la mer, et
- au moins deux seconds piliers verticaux équipés chacun à leur extrémité inférieure d'un vérin de préférence hydraulique, les au moins deux vérins étant aptes à coopérer avec des deuxièmes embases ancrées au fond de la mer les supportant, lesdits seconds piliers étant disposés de manière à permettre de régler et faire varier l'inclinaison des dites premières et deuxièmes conduites de séparation et dite première conduite d'évacuation de gaz et première conduite d'évacuation de liquide par actionnement des dits vérins.

Cette structure ou bâti peut être descendue depuis la surface au fond de la mer à l'aide de câbles.

Avantageusement encore, le dispositif de séparation selon l'invention est installé au fond de la mer, et comprend une conduite d'arrivée de fluide assurant la liaison entre au moins une tête de puit de pétrole et ladite conduite d'alimentation de fluide reliée audit premier réservoir à son autre extrémité, et comprenant en amont de ladite conduite d'arrivée dudit fluide un dispositif de baisse de pression et, de préférence, une vanne de contrôle du débit de fluide.

Dans le procédé selon l'invention, on envoie ledit pétrole brut à l'extrémité inférieure dudit premier réservoir, à une pression réduite P1, inférieure à la pression statique au fond de la mer P2, de préférence telle que le différentiel de pressions ΔP = P1-P0, P0 étant la pression en surface, soit supérieur aux pertes de charges dans les deuxièmes conduites d'évacuation de gaz depuis le fonds de la mer jusqu'à la surface. Ceci permet de faire remonter le gaz en surface sans matériel complémentaire et/ou sans apporter d'énergie complémentaire externe notamment sans la mise en oeuvre d'un compresseur.

Avantageusement encore, on contrôle le débit d'arrivée de fluide brut en amont dudit premier réservoir par ladite vanne de contrôle de débit, et/ou on contrôle le débit d'évacuation du fluide dégazé en aval du dit premier collecteur par la vitesse de ladite pompe d'export en fonction des mesures au moins d'un dispositif de contrôle du niveau du fluide au sein au moins dudit premier collecteur.

Un dispositif de contrôle de niveau qui peut être par exemple une sonde de type radar ou sonar, permet d'assurer que le niveau de fluide à l'intérieur dudit premier réservoir et/ou premier collecteur préserve un volume libre suffisant pour la séparation du gaz.

De préférence, ledit dispositif de séparation liquide/gaz est connecté à une première embase ancrée au fond de la mer, de préférence ladite embase étant ancrée au fond de la mer par une première ancre à succion, ladite première embase supportant une série de parties mâles ou femelles de connecteurs automatiques, respectivement aux extrémités de ladite première conduite d'arrivée de fluide, d'une deuxième conduite d'évacuation de liquide dégazé et d'une troisième conduite d'évacuation de gaz, coopérant avec les parties complémentaires femelles ou, respectivement, mâles de connecteurs automatiques connectés auxdites deuxièmes conduites d'alimentation de fluide, première conduite d'évacuation de liquide et deuxième conduite d'évacuation de gaz, des connecteurs similaires supplémentaires, transmettant de préférence les informations ou la puissance entre le module dudit dispositif de séparation et la surface.

De préférence encore, ladite deuxième conduite d'évacuation de fluide coopère avec une dite pompe d'export, insérée dans un puits enfoncé au fond de la mer à coté de ladite ancre à succion de ladite première embase, de préférence ladite pompe étant installée à plusieurs mètres en dessous de ladite première embase et de préférence encore ledit puits étant solidaire de ladite ancre à succion, pour être évacuée en surface.

Dans un mode de réalisation particulier, on exporte le liquide de fluide dégazé depuis le fond de la mer jusqu'en surface à l'aide d'une dite pompe d'export.

Plus particulièrement, ledit dispositif de séparation est installé au fond de la mer, à une profondeur de 100 à 4 000 m et l'on établit une pression P2 de 10 à 50, de préférence 20 bar (20x10⁵ Pa) au sein desdits premier réservoir et premier et deuxième collecteurs, et premières et secondes conduites de séparation et troisièmes conduites de liaison, en baissant la pression à l'aide d'un dispositif de baisse de pression coopérant avec ladite conduite d'arrivée de fluide brut en amont dudit premier réservoir.

Avantageusement, lesdits premier réservoir, premier et deuxième collecteurs, dites première, deuxième et troisième conduites et collecteurs du dispositif de séparation selon l'invention sont isolés thermiquement par une même enceinte rigide d'isolation thermique remplie d'eau de mer, et en communication avec la mer par au moins un orifice de communication, de préférence la paroi de ladite enceinte comprenant de la mousse syntactique, ou un isolant thermique protégé par un support rigide en métal ou en matériaux composites, de préférence encore avec un dispositif de chauffage de l'eau de mer à l'intérieur de ladite enceinte, ledit orifice de communication et dispositif de chauffage étant de préférence encore en partie basse de ladite enceinte.

Ce mode de réalisation permet de maintenir le fluide de pétrole brut à la température élevée de 50 à 70°C, à laquelle il sort de la tête de puits, et faciliter ainsi la remontée en surface du fluide, en évitant la solidification des paraffines ou la formation d'hydrates de gaz par refroidissement du pétrole brut en dessous de 30-35°C.

Dans un mode de réalisation particulier, le dispositif de séparation selon l'invention comprend :
- des pluralités de 3 à 20, de préférence 4 à 12, de dites premières et deuxièmes conduites de séparation et respectivement troisièmes conduites de liaison, de préférence régulièrement répartie le long des premier réservoir (pour les premières conduites), premier et deuxième collecteurs (pour les deuxièmes conduites) et respectivement dites premières et deuxièmes conduites de séparation (pour les troisièmes conduites de liaison), le nombre desdites premières conduites de séparation étant, de préférence, supérieur ou égal à celui desdites deuxièmes conduites de séparation et
- des uniques dites conduites d'alimentation de fluide, première conduite d'évacuation de liquide et respectivement première conduite d'évacuation de gaz.

Dans un mode de réalisation particulier, lesdites première et deuxième conduites de séparation présentent une longueur de 5 à 50 m, de préférence 10 à 20 m et lesdites troisièmes conduites présentent une longueur de 1 à 5 m.

La présente invention fournit enfin, un procédé de mise en place au fond de la mer d'un dispositif de séparation, caractérisé en ce que l'on réalise les étapes suivantes dans lesquelles :
a) on descend, depuis la surface, un dit dispositif de séparation que l'on repose au fond de la mer, et
b) on ajuste l'horizontalité desdits premiers réservoirs et premiers et deuxièmes collecteurs, et on ajuste l'inclinaison desdites première et deuxième conduites de séparation par actionnement dudit système de vérins.

Plus particulièrement, lorsque ledit dispositif de séparation comporte une dite structure support avec 3 dits premier et deuxièmes piliers et desdits vérins, on réalise les étapes suivantes dans lesquelles :
a) on descend depuis la surface et on pose ledit dispositif de séparation sur trois embases de trois ancres a succion enfoncées au fond de la mer, puis
b) on ajuste l'horizontalité de l'axe dudit premier réservoir diffuseur et desdits premier et deuxième collecteurs, par rapport à l'horizontal en actionnant au moins un des vérins à l'aide d'un ROV puis
c) on ajuste l'inclinaison desdites premières et deuxièmes conduites de séparation en actionnant les tiges des deux vérins, d'une même valeur, dans la même direction.

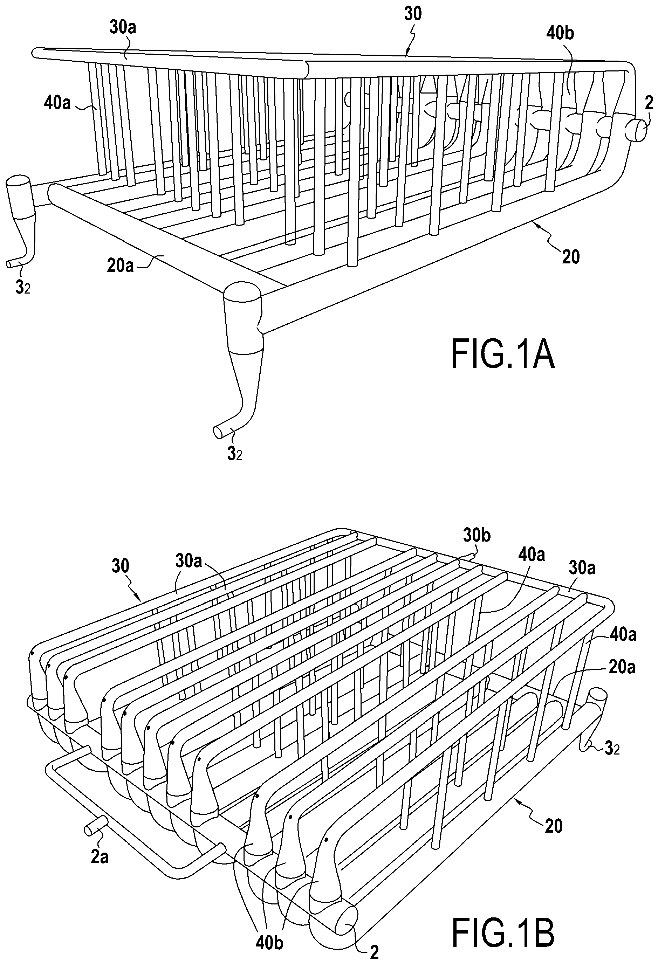

D'autres caractéristiques et avantages de la présente invention apparaîtront à la lumière de la description détaillée des modes de réalisation qui va suivre, en référence aux figures 1 à 6 :
- les figures 1A et 1B représentent des vues en perspectives d'un dispositif de séparation selon l'invention sans sa structure support,
- les figures 2A et 2B sont des vues de côté d'un séparateur sous-marin horizontal selon l'invention en cours de descente (figure 2 A) et fixées (figure 2B) à son embase solidaire d'une ancre à succion principale installée au fond de la mer, et ses points d'appui secondaires solidaires d'ancres à succion secondaires, la figure 2B horizontale illustrant le cheminement du pétrole en cours de dégazage et du gaz,
- la figure 2C est une vue d'une section de l'ancre a succion principale selon le plan AA de la figure 1,
- la figure 3 est une vue en coupe du premier réservoir ou premier collecteur avec les phases liquide et gazeuse.
- la figure 4 est une vue de dessus en section partielle au niveau du plan BB de la figure 2.
- la figure 5 illustre un dispositif de perte de charge contrôlée,
- la figure 5A est une vue de côté selon YY du cheminement du fluide au sein dudit dispositif de perte de charge contrôlée de la figure 5,
- la figure 5B est une vue de côté selon XX du cheminement du fluide au sein dudit dispositif de perte de charge contrôlée de la figure 5,
- la figure 5C est un graphique illustrant les pertes de charge respectivement dans un dispositif selon la disposition de la figure 2B et selon le dispositif de perte de charge contrôlée de la figure 5,
- la figure 6 est une vue de côté d'un séparateur sous-marin installé sur son embase, équipé d'une cloche isolante et de moyens de réchauffage.

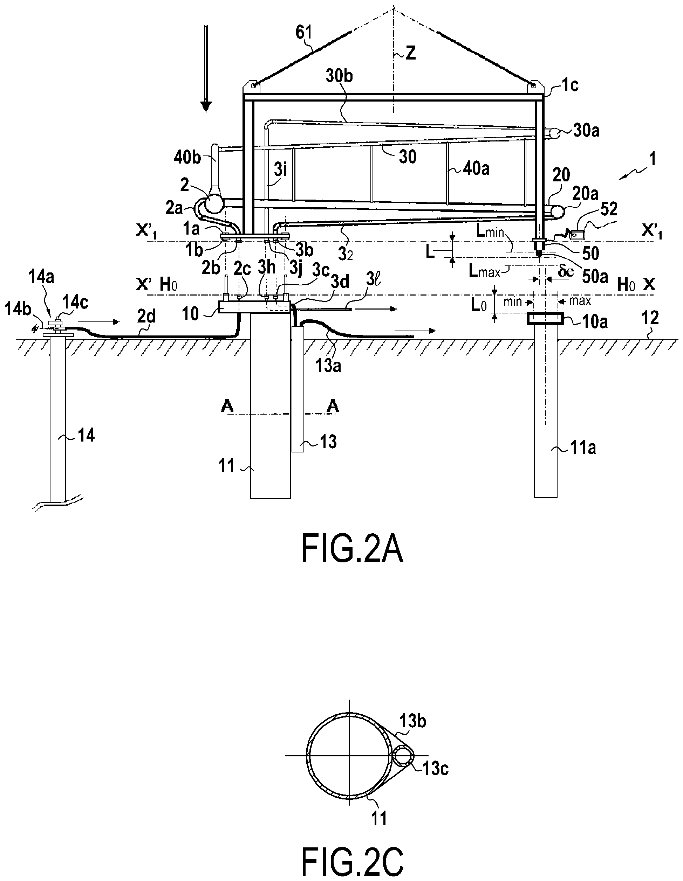

Sur la figure 2A, on a représenté la descente d'un dispositif séparateur liquide/gaz sous-marin selon l'invention 1, depuis la surface au moyen d'un câble, non représenté, vers une première embase 10 reposant au fond de la mer solidaire d'une ancre à succion principale 11 enfoncée dans le fond de la mer 12.

La première embase 10 est disposée à proximité d'un puits de pétrole 14 équipée d'une tête de puits 14a reliée par une conduite d'arrivée de pétrole brut 2d, acheminant le pétrole brut depuis la tête de puits jusqu'à la dite embase.

Le séparateur sous-marin selon l'invention comporte :
- des premières conduites 20 de cheminement de pétrole et de retour de gaz, présentant une pente descendante d'angle α dans le plan XZ,
   ∘ lesdites premières conduites étant reliées, en amont, à un premier réservoir diffuseur 2 cylindrique sensiblement horizontal, ledit collecteur étant alimenté en pétrole brut par la conduite d'alimentation 2a,
   ∘ lesdites premières conduites étant reliées en aval à un premier collecteur cylindrique 20a, sensiblement horizontal, ledit premier collecteur étant relié à une première conduite d'évacuation 3₂ en pente vers l'embase 1a,
- des deuxièmes conduites 30 de cheminement de gaz et de retour de pétrole, présentant une pente d'angle β dans le plan XZ,
   ∘ lesdites deuxièmes conduites étant reliées, en amont, audit premier réservoir 2 sensiblement horizontal, par l'intermédiaire de conduites de liaison 40b, de préférence sensiblement verticale,
   ∘ lesdites deuxièmes conduites étant reliées en aval à un deuxième collecteur cylindrique 30a, sensiblement horizontal, ledit deuxième collecteur étant relié à une première conduite d'évacuation de gaz 30b présentant une pente montante d'angle y, elle-même reliée à une deuxième conduite de séparation de gaz 3i solidaire de l'embase 1a,
- des troisièmes conduites 40a de cheminement de gaz vers le haut et de retour de pétrole dégazé vers le bas reliant les dites premières et deuxièmes conduites.

Lesdites premières conduites 20 sont de préférence toutes identiques en termes de diamètre, de longueur et de mode de raccordement, en amont, au premier réservoir 2, et en aval, au premier collecteur 20a. Du fait qu'elles doivent résister à l'implosion sous les pressions considérables des grands fonds, leur diamètre est avantageusement limité, car l'épaisseur nécessaire est directement proportionnelle au diamètre de ladite conduite. Ainsi, les diamètres des premières conduites seront de 0.5m à 1.5m, ce qui nécessite des épaisseurs de paroi de 25 à 150mm selon la profondeur à laquelle est installé le dispositif de séparation.

De la même manière, lesdites deuxièmes conduites 30 sont de préférence toutes identiques en terme de diamètre, de longueur et de mode de raccordement, en amont, au premier réservoir 2, et en aval, au deuxième collecteur aval 30a, les longueurs, diamètres et épaisseurs des deuxième conduites sont similaires à ceux des premières conduites.

Lesdites troisièmes conduites 40a sont de préférence toutes identiques en termes de diamètre, et de mode de raccordement, en partie supérieure, aux deuxièmes conduites 30, et en partie inférieure, aux premières conduites 20. Lesdites troisièmes conduites constituent des conduites de retour de pétrole dégazé vers les premières conduites 20, et des conduites de cheminement de gaz vers le deuxièmes conduites 30 et sont avantageusement disposées à intervalle réduit, régulier ou non, par exemple tous les trois-quatre mètres, de manière améliorer les échanges, donc la qualité de la séparation entre le pétrole et le gaz. Leur diamètre est beaucoup plus faible, de 75 à 150mm.

Sur les figures 2A-2B-4, on a représenté huit premières conduites 20, huit deuxièmes conduites 30, chacun des couples première conduite-deuxième conduite étant relié par quatre troisièmes conduites 40a espacées de manière sensiblement uniforme. Toutefois, le nombre de deuxièmes conduites 30 peut être inférieur à celui des premières conduites 20, et dans ce cas chacune des premières conduites sera reliée à au moins une deuxième conduite de manière à ce que le gaz puisse cheminer vers le haut, plusieurs premières conduites pouvant être reliées à une seule deuxième conduite.

Le dispositif séparateur 1 comporte un bâti principal 1c supportant l'ensemble des conduites et en partie basse, de préférence du côté du premier réservoir diffuseur amont 2, un châssis la en forme de plate-forme comprenant quatre perforations équipées de quatre guides en forme d'entonnoirs 1b venant coopérer avec des poteaux 10a correspondants, solidaires de l'embase 10 et s'élevant verticalement au-dessus de celle-ci, de manière à ce que, lors de la descente du dispositif en direction de l'embase 10, en fin de descente, les parties femelles 2b-3b-3j d'une série de connecteurs automatiques situés dessous ledit châssis, viennent coopérer avec les parties mâles complémentaires 2c-3c-3k de connecteurs automatiques disposés sur ladite embase.

Ledit premier réservoir diffuseur 2 comporte une conduite d'alimentation en pétrole 2a à l'extrémité duquel, en sous face dudit châssis 1a, se trouve la partie femelle 2b d'un connecteur automatique qui coopère avec la partie complémentaire mâle 2c du connecteur automatique sur ladite embase 10, à l'extrémité de ladite conduite d'arrivée de fluide brut 2d.

Le deuxième collecteur 30a est relié à la deuxième conduite 30b en pente montante d'un angle y, cette dernière étant relié à une première conduite d'évacuation de gaz 3i, dont l'extrémité inférieure est solidaire de ladite embase 10 en sous face de celle-ci et comprend la partie femelle 3j d'un connecteur automatique qui coopère avec la partie complémentaire mâle 3ₖ du connecteur automatique solidaire de ladite embase 10a lorsque le dispositif de séparation est fixé sur ladite embase.

Ladite partie mâle 3k sur ladite embase est fixée à l'extrémité d'une deuxième conduite d'évacuation de gaz 3l.

Le pétrole brut à haute pression, par exemple à 100-200bars, voire plus, provient du puits 14 surmontée de la tête de puits 14a équipé d'un dispositif de baisse de pression de type duse 14b et d'une vanne automatisée de contrôle de débit 14c pilotés depuis la surface, et reliés à une conduite d'arrivée de pétrole 2d conduisant le pétrole brut à pression réduite, par exemple 20 bars vers le séparateur sous-marin 1.

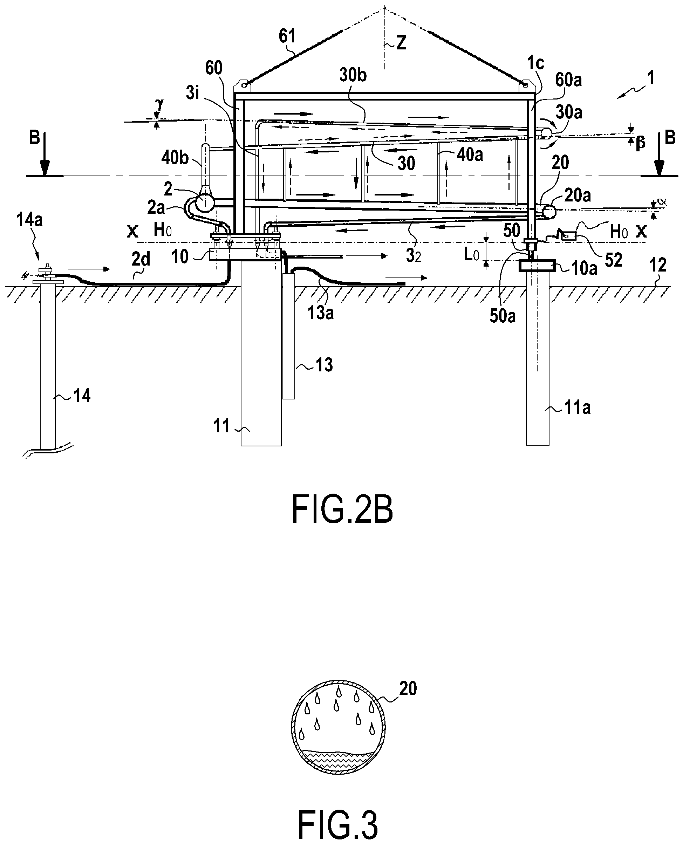

Sur la figure 2B, on a représenté les cheminements croisés du pétrole en cours de dégazage et du gaz. Le cheminement de la phase liquide de pétrole est représenté en traits continus, et le cheminement de la phase gazeuse en pointillés.

Le pétrole brut pénètre dans le premier réservoir diffuseur 2 et le flot de pétrole se déverse en se répartissant dans lesdites premières conduites 20 en pente douce descendante d'un angle a, par exemple 0.5 à 5 degrés, de préférence de 2 à 4 degrés. Le pétrole coule alors lentement vers le premier collecteur 20a et ne remplit que la partie basse de ladite première conduite 20 et du premier collecteur 20a, comme illustré sur la figure 3, autorisant ainsi au gaz de se séparer de la phase liquide, ladite phase gazeuse cheminant alors en contre sens dans la partie supérieure de ladite première conduite 20, pour rejoindre par le biais des troisièmes conduites 40a, la deuxième conduite de gaz 30. Sur la même figure 3, on a représenté le gaz se séparant des condensats sous forme de gouttes qui retombent alors par simple gravité dans le flot de pétrole dégazé cheminant de la gauche vers la droite, le gaz cheminant de la droite vers la gauche et remontant vers la deuxième conduite 30 par l'intermédiaire des troisièmes conduites sensiblement verticales 40a.

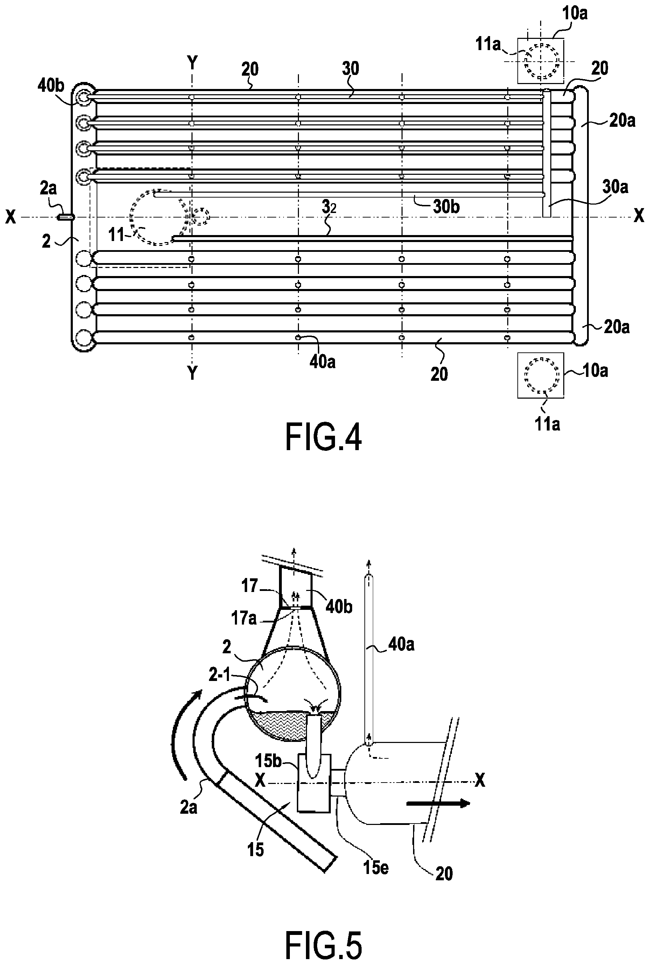

La figure 4 est, dans la demi partie haute de la figure, une vue de dessus relative à la figure 2B, et dans la partie basse une coupe en vue de dessus selon le plan BB de la figure 2B. Ainsi, chacune desdites premières conduites 20 est associée à une dite deuxième conduite 30, lesdites conduites étant reliées entre elles par quatre troisièmes conduites 40a.

Pour la clarté des dessins, on a représenté des deuxièmes conduites 30 d'un diamètre plus faible que les premières conduites de pétrole 20, mais selon la teneur en gaz du pétrole brut, on sera amené à augmenter ou à réduire le diamètre desdites deuxièmes conduites 30 qui véhiculent principalement du gaz, par rapport au diamètre desdites premières conduites de pétrole. De même, on a représenté une dite deuxième conduite 30 associée à chaque dite première conduite 20, mais, pour limiter les travaux de chaudronnerie, on associe avantageusement une dite deuxième conduite 30 à un groupe de deux, trois, voire un plus grand nombre de premières conduites 20, chacune desdites deuxièmes conduites 30 étant directement ou indirectement reliée à chacune desdites premières conduites 20 du même groupe, de manière à ce que les cheminement de gaz vers le haut et les retours de pétrole vers le bas puisse se faire sans encombre.

Le premier réservoir diffuseur 2 présente un diamètre important, par exemple 1m, et s'étend sur la largeur du séparateur par exemple 6 à 15m, de manière à amortir les phénomènes appelés en anglais « slugs », c'est à dire « écoulement bouchon », qui correspondent à l'arrivée brutale par la conduite inférieure 2a de poches de gaz importantes, ou de bouchons de pétrole entre deux poches de gaz.

Ces phénomènes sont très violents et perturbent complètement le processus de séparation, car une grande partie du pétrole brut dans la zone du plan BB se trouve alors projeté brutalement vers le haut dudit premier réservoir.

Ces perturbations se répercutent alors dans chacune des premières conduites 20 de manière plus ou moins variable, mais la grande longueur desdites premières conduites, par exemple 20-30m, limite les effets déstabilisateurs de ces slugs dans la zone proche du premier collecteur 20a.

Le pétrole brut dégazé est récupéré en partie basse par le biais du premier collecteur 20a dirigeant le fluide vers une première conduite d'évacuation de fluide dégazé 3d. Celle-ci alimente la pompe d'export immergée 13c logée dans un puits 13 attenant à l'ancre à succion 11 et solidarisé à cette dernière par des goussets 13b représentés sur la figure 2C, mais non représenté sur les autres figures.

En sortie de pompe d'export, le pétrole brut dégazé est expédié par un deuxième élément de conduite d'évacuation de fluide dégazé 13a, soit vers un support flottant en surface, soit vers un séparateur secondaire eau-huile, de manière à ce que seule l'huile soit expédiée vers la surface, l'eau étant soit réinjectée dans un puits similaire au puits 14, ou encore simplement relâchée en mer, dans la mesure où elle présente une propreté acceptable, c'est-à-dire une quantité suffisamment faible de particules résiduelles de pétrole brut.

De la même manière, le gaz séparé en partie haute est rassemblé dans le deuxième collecteur 30a, puis est expédié par la conduite d'évacuation de gaz 3l, soit vers la surface, soit re-comprimé puis réinjecté dans un puits, non représenté, similaire au puits 14.

Pour éviter d'avoir à re-comprimer le gaz avant de l'expédier en surface, on ajuste avantageusement la pression de fonctionnement du séparateur sous-marin, c'est-à-dire la pression P1 à l'intérieur des dits réservoirs, à une pression largement supérieure à la perte de charge dans ladite conduite gaz, par exemple une pression de fonctionnement de 20 bars, alors que la perte de charge ne serait que de 3 bars sur la longueur complète de la conduite de remontée en surface 3l pour le débit maximal de gaz. Cependant, pour que le dégazage du pétrole se fasse dans de bonnes conditions, on utilisera une pression P1 peu élevée par rapport à la pression de la tête de puits.

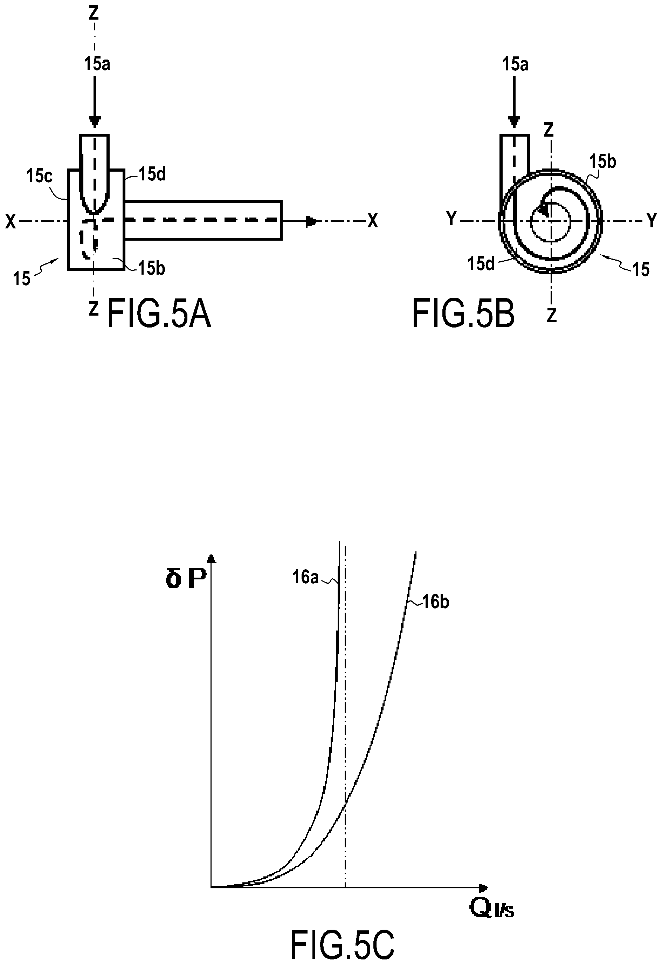

Sur les figures 5-5A-5B, on a représenté en coupe et en vue de côté une disposition préférée du raccordement de la première conduite 20 avec le premier réservoir diffuseur 2, dans laquelle ladite première conduite 20 est relié à son extrémité amont à un dispositif additionnel 15 de type cyclone destiné à créer une perte de charge supplémentaire en cas d'augmentation significative du débit. A cet effet, le dispositif de type cyclone 15 est constitué d'une enceinte comprenant une paroi cylindrique 15b d'axe parallèle à celui de la première conduite 20, de préférence concentrique à ladite première conduite 20, et de diamètre compris, de préférence, entre 5 et 25% du diamètre de ladite conduite 20.

La paroi cylindrique 15b de l'enceinte est fermée et rendue étanche à ses extrémités au niveau des faces opposées 15c-15d. L'une de ses deux faces, la face 15d est reliée par un tronçon de conduite de diamètre réduit 15e à l'extrémité de ladite première conduite 20. Le diamètre dudit tronçon15 est compris, de préférence, entre 10 et 50% du diamètre de la paroi cylindrique 15b.

La paroi cylindrique 15b du dispositif 15 possède une dérivation tubulaire permettant une entrée tangentielle 15a du pétrole brut contre la surface interne de la dite paroi cylindrique 15b dans une direction parallèle sensiblement à la direction axiale ZZ des dites troisièmes conduites verticales 40a.

En fonctionnement normal et régulier, l'écoulement du pétrole brut reste sensiblement au niveau du plan axial XY de la conduite 15e d'inclinaison d'un angle α par rapport à l'horizontale, et le dispositif 15 ne modifie pas le fonctionnement du système. En cas d'augmentation importante du débit, ou d'instabilité du système lors de la venue d'un « slug », l'écoulement dans le dispositif 15 devient violemment tourbillonnaire comme indiqué sur la figure 5B créant ainsi une perte de charge importante, réduisant de ce fait la transmission de l'instabilité temporaire du processus vers la première conduite 20.

Sur la figure 5, on montre l'arrivée des conduites d'alimentation 2a au niveau d'un orifice 2-1 du réservoir 2, ledit orifice 2-1 étant disposé sensiblement à mi hauteur dudit réservoir. La partie supérieure dudit premier réservoir, au-dessus de l'orifice 2-1 crée un volume libre rempli de gaz qui permet d'amortir et, donc, de maîtriser les éclats et projection de fluide qui peuvent intervenir lorsque, en pénétrant à l'extrémité inférieure dudit premier réservoir, certaines poches de gaz ("slug") s'expansent brutalement en réalisant des projections violentes de liquide à l'intérieur dudit premier réservoir.

En partie basse de la conduite verticale 40b, on dispose avantageusement un diaphragme 17 présentant un orifice 17a de faible diamètre, par exemple 75mm, de manière à ce que les effets violents du « slug » soient limités au réservoir diffuseur 2 et perturbent au minimum le cheminement du gaz vers le haut.

L'effet de ces dispositifs de perte de charge 15 et 17 est illustré sur le diagramme 5C qui représente en ordonnées les pertes de charge et en abscisses les débits de fluide.

Dans le cas d'un raccordement direct de la conduite 20 au premier réservoir, les pertes de charge sont très faibles et le « slug » perturbe considérablement le processus de séparation tout le long de la première conduite 20. Sur le diagramme de la figure 5C, la courbe 16b des pertes de charges est sensiblement parabolique et représente la perte de charge du dispositif 17, qui atténue de manière significative la perturbation du « slug » vers la conduite verticale 40b, et le dispositif 15 présente une perte de charge correspondant à la courbe 16a. Ladite perte de charge reste sensiblement parabolique pour les faibles débits, mais elle croît de manière asymptotique pour les débits importants, ce qui permet de filtrer de manière radicale la perturbation engendrée par le «slug», cette dernière restant alors confinée dans le premier réservoir diffuseur 2, et n'étant de ce fait quasiment pas transmise dans les premières conduites de séparation 20. De plus cette perte de charge importante a pour effet de répartir de manière optimale la perturbation entre les diverses premières conduites de séparation 20.

Le dispositif étant installé à grande profondeur, la température de l'eau de mer est de 3-5°C, et pour éviter que le pétrole brut ne fige en paraffine, ou que des hydrates ne se forment, créant ainsi des blocages généralisés qu'il est difficile, voire dans certains cas impossible à résorber, on cherche à isoler chacun des éléments entre la sortie de terre du puits 14 et la surface, ou les puits de réinjection.

A cet effet, on installe avantageusement une enceinte isolante 27 entourant intégralement les réservoirs et l'embase 10 du séparateur sous-marin, l'enceinte 27 étant rigidifiée par exemple par une structure métallique ou composite et comportant un isolant interne 27a qui peut être une mousse syntactique, un gel d'isolation, ou tout autre système d'isolation compatible avec la pression du fond de la mer qui est sensiblement de 100 bars, soit sensiblement 10MPa par tranche de 1000m d'eau.

On aurait pu isoler séparément chacun des composants du séparateur sous-marin, c'est-à-dire chacune des diverses conduites, mais la partie haute au dessus du plan BB n'étant en général qu'en phase gazeuse, les risques de points froids s'en trouvent alors fortement augmentés. En créant un volume interne calorifugé, l'eau de mer contenue dans ledit volume sera en permanence sensiblement à la température T1 du pétrole brut entrant par 2d. En effet, un courant de convection interne au volume brassera en permanence ledit volume, maintenant ainsi pendant toute la durée du processus une température sensiblement constante au sein du séparateur sous-marin, dont la hauteur peut dépasser 5m, par exemple de 5 à 15m, et plus particulièrement dans la partie haute dudit séparateur, laquelle est de manière quasi permanente remplie en gaz.

Pour limiter les transferts de chaleur en partie basse, on disposera avantageusement une isolation complémentaire au niveau de l'embase 10.

Un orifice inférieur de l'enceinte 27, non représenté, met avantageusement en communication le volume interne et le milieu ambiant de manière à éviter les variations de pression dues aux dilatations mais il sera de faible diamètre, par exemple 50mm, pour éviter les phénomènes de convection indésirables.

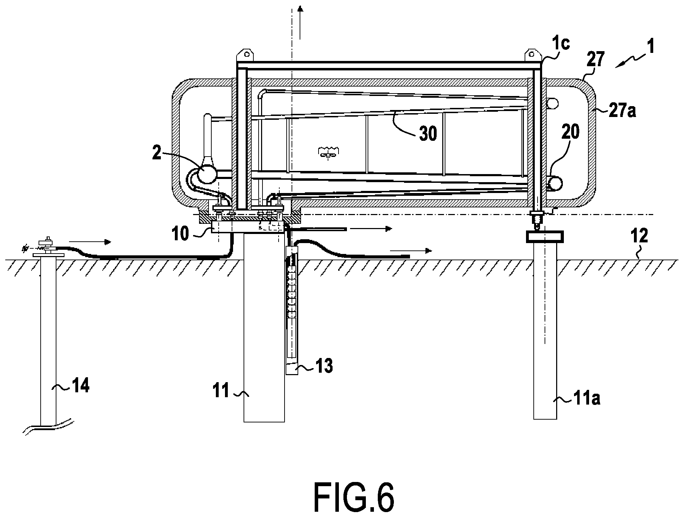

Comme représenté sur la figure 6, on dispose avantageusement à l'intérieur de l'enceinte isolante 27 un dispositif de préchauffage/réchauffage 18 de l'eau, de manière à maintenir son volume interne d'eau de mer à une température suffisante évitant la formation de bouchons de paraffine ou d'hydrates pendant les phases de démarrage, d'arrêt prolongé, ou de production à faible régime. Ce dispositif de chauffage peut être électrique, ou une boucle de fluide circulant, par exemple une dérivation du pétrole brut de production passant par un serpentin non calorifugé, au sein dudit volume d'eau interne à l'enceinte calorifugée. Pour la clarté des explications, ledit dispositif de préchauffage/réchauffage et de brassage 18 a été représenté à mi hauteur de l'enceinte 27, mais il est avantageusement installé en partie basse, de préférence au niveau de l'embase principale. On prendra grand soin à isoler correctement les éléments de la structure porteuse 1c, de manière à minimiser les déperditions de calories.

Sur cette même figure 6, on a représenté la pompe d'export 13c installée dans son puits 13 et que l'on peut avantageusement extraire verticalement, à travers un puits isolé, non représenté, sans avoir à démonter le séparateur sous-marin, pour effectuer sa maintenance en surface.

Le puits de pompe 13 étant solidaire de l'ancre à succion, se trouvera ainsi installé en même temps que ladite ancre à succion 11 et dans une position géométrique connue par rapport à l'embase 10 de supportage du séparateur sous-marin 1.

Cette disposition particulière de la pompe 13c installée à plusieurs mètres, voire plusieurs dizaines de mètres en dessous du séparateur, permet d'améliorer avantageusement le gavage de ladite pompe 13c et ainsi de fiabiliser son fonctionnement et sa durée de vie.

Le dispositif selon l'invention nécessite une grande précision lors de son installation, de manière à ce que l'angle a, soit le plus exact possible par rapport aux spécifications du système. A cet effet, le module est avantageusement posé sur une ancre à succion principale 11 de forte capacité portante, par exemple de 5m de diamètre, et deux ancres à succion secondaires 11a-11b de plus faible capacité portante, par exemple de 2.5m de diamètre. L'ancre à succion principale comporte tous les éléments de guidage et de connexion précédemment décrits, alors que les ancres à succion secondaires 11a ne servent que de simple appui, et de par la taille de sa partie supérieure, de préférence plane, comme représenté sur la figure 2A, autorise un désaxage δe de l'axe des piliers de la structure 1c par rapport à l'axe de ladite pile secondaire 11a. En procédant ainsi, le positionnement des ancres à succion secondaires 11a ne nécessite pas une précision extrême l'une par rapport à l'autre, ni par rapport à l'ancre à succion principale 11, ce qui facilite grandement leur installation par des profondeurs de 1500-2000m, voire plus.

Sur les figures 2A et 2B, les piliers de la structure 1c présentent, en regard des ancres à succion secondaires, un vérin mécanique ou hydraulique 50 dont la tige 50a est en contact avec la partie supérieure, de préférence plane, de l'ancre à succion secondaire 11a. Ce vérin 50 est actionné au moyen du ROV 52, sous-marin automatique piloté depuis la surface, de manière à modifier l'assiette du module sur ses trois appuis en jouant sur la longueur de tige 50a, sortie.

Ainsi, on descend le dispositif de séparation depuis la surface avec des câbles 61 et on le pose simplement sur les trois embases 10, 10a des trois ancres a succion 11, 11a. Puis, on ajuste dans un premier temps le parallélisme de l'axe du diffuseur 2, donc des collecteurs 20a-30a, par rapport à l'axe horizontal YY perpendiculaire à la figure, en actionnant au moins un des vérins 50 à l'aide du ROV, l'inclinaison étant transmise en surface à partir d'un inclinomètre, non représenté, installé directement sur le module de séparation. Enfin, on ajuste l'angle α à une valeur très précise par rapport aux spécifications, en actionnant les tiges des deux vérins 50a, d'une même valeur, dans la même direction. Les vérins ont une course telle que l'on puisse compenser des variations d'enfoncement des ancres à succion, par exemple 0.5m, correspondant à δL = Lmax-Lmin, comme représenté sur les figures 2. Ainsi, il n'est pas nécessaire que les trois ancres à succion soient enfoncées exactement à la même profondeur, pour que l'on puisse ajuster avec une précision extrême l'horizontalité des axes du diffuseur 2 et des collecteurs 20a-30a, et la valeur de l'angle α dont la précision reste un paramètre extrêmement sensible du dispositif de séparation sous-marine. Au cas où une ancre à succion secondaire serait trop enfoncée, ou serait déstabilisée dans le temps, on intercale alors avantageusement une cale d'épaisseur, par exemple de 25cm d'épaisseur, entre l'extrémité de la tige du vérin et la partie supérieure plane de l'ancre à succion secondaire.

Le dispositif de réglage de l'horizontalité et de l'angle α à l'aide de vérins 50-51 actionnés par à l'aide d'un ROV, permet d'effectuer des opérations de maintenance, ou encore de changer ledit angle a, c'est-à-dire l'augmenter ou le réduire, de manière à modifier le point de fonctionnement dudit séparateur, en fonction par exemple de variations importantes, dans le temps, du ratio de gaz, ou du pourcentage d'eau dans le pétrole brut. On aura cependant pris soin de définir une plage de variation de l'angle α compatible avec les angles β et γ, de manière à ce qu'il n'apparaisse pas de contre-pente indésirable dans les deuxièmes conduites, ni dans la conduite 30b d'évacuation du gaz.

A titre d'exemple, un séparateur horizontal selon l'invention présente une capacité de séparation de 50 000 barils de pétrole par jour, soit 333.3m3/heure de pétrole brut avec un GOR (gas/oil ratio), c'est-à-dire rapport gaz/pétrole brut de 50, c'est-à-dire 50Nm3 de gaz (Nm3= m3 de gaz à pression atmosphérique) par m3 de pétrole brut et une teneur en eau pouvant varier de 0 à 90%. Il est constitué de 12 premières conduites de pétrole 20 de diamètre interne 750mm et de longueur 14m, de trois deuxièmes conduites de gaz 30 de diamètre interne 500mm et de longueur 14m, et de trois conduites verticales de liaison 40a de diamètre interne 150mm et de longueur d'environ 3m, reliant chacune des secondes conduites de gaz 30 à un ensemble de quatre premières conduites de pétrole 20, autorisant ainsi le cheminement du gaz vers le haut et le retour des condensats vers le bas. Au début de l'exploitation du champ, le pétrole brut contenant peu d'eau présente une viscosité importante et la pente α des premières conduites est alors ajustée à une valeur de 8°, la pente β des secondes conduites est de 4° et la pente γ de la ligne de retour de gaz 30b est de 10°. Le dispositif de séparation mesure environ 18m de longueur, 12m de largeur et a une hauteur de 6m environ. Son poids dans l'air est de 180 tonnes, dont 80 tonnes de structure de supportage 1c. L'ancre à succion principale 11 a un diamètre de 5m et une longueur totale de 25m, les ancres à succion secondaires 11a ont un diamètre de 2m et une longueur totale de 15m. En fin d'exploitation, la viscosité du pétrole brut diminue en raison d'une teneur en eau beaucoup plus importante : en agissant au moyen d'un ROV sur les vérins 50, la pente α des premières conduites est alors réduite à 2° pour ralentir la progression du pétrole à dégazer dans lesdites premières conduites. La pente β des secondes conduites est alors de 10° et la pente γ de la ligne de retour de gaz est de 4°, assurant ainsi un retour des condensats par simple gravité vers les premières conduites.

## Revendications

1. Dispositif sous-marin de séparation liquide/gaz de deux phases respectivement liquide et gazeuse d'un fluide, notamment les phases liquide et gazeuse d'un pétrole brut **caractérisé en ce qu'**il comprend un bâti (1c) apte à reposer au fond de la mer, supportant les conduites et collecteurs suivants aptes à être disposés les unes par rapport aux autres de la manière suivante :
a) au moins une, de préférence une pluralité de premières conduites de séparation (20) s'étendant depuis un premier réservoir (2) cylindrique de forme allongée à section circulaire disposé horizontalement auquel elles sont reliées en amont, ledit premier réservoir(2) étant de préférence de plus grand diamètre que lesdites premières conduites de séparation (20), lesdites premières conduites de séparation étant inclinées d'un angle α de 1 à 5° par rapport à l'horizontal avec une pente descendante depuis ledit premier réservoir vers un premier collecteur cylindrique (20a) horizontal et auquel lesdites premières conduites sont reliées en aval, ledit premier réservoir diffuseur (2) étant alimenté par au moins une conduite d'alimentation de fluide (2a), et ledit premier collecteur (20a) étant relié à une première conduite d'évacuation de liquide (3₂) en pente descendante et , de préférence, comprenant en aval une pompe d'export (13c) apte à soutirer ledit liquide dégazé du dit premier collecteur (20a), et
b) au moins une, de préférence une pluralité de deuxièmes conduites de séparation (30) disposées au dessus desdites premières conduites (20), s'étendant depuis et au dessus dudit premier réservoir (2) avec une pente montante depuis ledit premier réservoir (2) vers un deuxième collecteur cylindrique (30a) horizontal, lesdites deuxièmes conduites de séparation étant inclinées d'un angle β supérieur à α, de préférence inférieur à 10° par rapport à l'horizontal, ledit deuxième collecteur (30a) étant de préférence de plus grand diamètre que lesdites deuxièmes conduites et de plus petit diamètre que ledit premier réservoir, ledit deuxième collecteur (30a) étant relié à une première conduite d'évacuation de gaz (30b), et
c) une pluralité de troisièmes conduites de liaison verticale (40a) entre chaque dite première conduite de séparation (20) et chaque dite deuxième conduite de séparation (30), et
d) un système de vérins (50), de préférence hydraulique, permettant l'ajustement de l'inclinaison desdites première et deuxième conduites de séparation, et du positionnement horizontal dudit premier réservoir (2) et dits premier collecteur (20a) et deuxième collecteur (30a).

2. Dispositif selon la revendication 1 **caractérisé en ce que** ladite première conduite d'évacuation de gaz (30b) est en pente montante depuis ledit deuxième collecteur jusqu'à l'extrémité d'une deuxième conduite d'évacuation de gaz (3i), ladite première conduite d'évacuation de gaz (30b) étant inclinée d'un angle γ supérieur à a, de préférence inférieur à 10°.

3. Dispositif selon la revendication 1 ou 2, **caractérisé en ce que** lesdites deuxièmes conduites de séparation sont reliées en amont audit premier réservoir (2) respectivement par une pluralité de deuxièmes conduites de liaison(40b) de plus grande pente que lesdites deuxièmes conduites de séparation de préférence verticales.

4. Dispositif selon l'une des revendications 1 à 3 **caractérisé en ce que** lesdits premier réservoir (2) et premier et deuxième collecteurs (20a, 30a) sont parallèles, et lesdites premières et deuxièmes conduites de séparation s'étendent dans une même direction perpendiculaire à la direction longitudinale desdits premier réservoir et dits premier et deuxième collecteurs.

5. Dispositif selon l'une des revendications 1 à 4, **caractérisé en ce qu'**il comprend, en aval dudit premier réservoir à l'extrémité amont desdites premières conduites de séparation (2), des dispositifs de contrôle du débit du transfert de fluide par perte de charge (15), de préférence de type cyclone à entrée tangentielle (15a) perpendiculaire à la direction axiale desdites premières conduites de séparation (20), et à sortie axiale dans l'axe (XX) desdites premières conduites (2).

6. Dispositif selon l'une des revendications 1 à 5, **caractérisé en ce que** le dispositif comprend un bâti (1c) constitué d'une armature de poutres supportant lesdites première et deuxième conduites, dit premier réservoir et dits premier et deuxième collecteurs, ledit bâti comprenant :
- au moins un premier pilier vertical (60) comprenant à son extrémité inférieure un premier châssis (1a) supportant des parties de connecteurs automatiques (2b,3b,3j) connectés auxdites conduite d'alimentation de fluide (2a), première conduite d'évacuation de fluide (3₂) et deuxième conduite d'évacuation de gaz (3i), le dit châssis étant apte à coopérer en fixation avec et sur une première embase (10) ancrée au fond de la mer, et
- au moins deux seconds piliers verticaux (60a) équipés chacun à leur extrémité inférieure d'un vérin (50) de préférence hydraulique, les au moins deux vérins (50) étant aptes à coopérer avec des deuxièmes embases ancrées au fond de la mer (11a) les supportant, lesdits seconds piliers étant disposés de manière à permettre de régler et faire varier l'inclinaison desdites premières et deuxièmes conduites de séparation (20,30) et dite première conduite d'évacuation de gaz (30b) par actionnement desdits vérins.

7. Dispositif selon l'une des revendications 1 à 6, **caractérisé en ce que**, lorsqu'il est installé au fond de la mer (12), il comprend une conduite d'arrivée de fluide (2b) apte à assurer la liaison entre au moins une tête de puits de pétrole (14) et ladite conduite d'alimentation de fluide (2a) reliée audit premier réservoir à son autre extrémité, et comprenant en amont de ladite conduite d'arrivée (2d) dudit fluide un dispositif de baisse de pression (14b) et, de préférence, une vanne de contrôle du débit de fluide (14c).

8. Dispositif selon les revendications 6 et 7, **caractérisé en ce qu'**il comprend une première embase (10) à laquelle il est connecté, ladite première embase étant apte à être ancrée au fond de la mer (12), de préférence ladite première embase (10) étant apte à être ancrée au fond de la mer par une première ancre à succion (11), ladite première embase (10) supportant une série de parties mâles ou femelles de connecteurs automatiques (2c, 3c, 3k), respectivement aux extrémités de la dite première conduite d'arrivée de fluide (2d), d'une deuxième conduite d'évacuation de liquide dégazé (3d) et d'une troisième conduite d'évacuation de gaz (3l), coopérant avec les parties complémentaires femelles ou, respectivement, mâles de connecteurs automatiques (2b, 3b, 3j) connectés aux dites deuxièmes conduite d'alimentation de fluide (2a), première conduite d'évacuation de liquide (3₂) et deuxième conduite d'évacuation de gaz (3i).

9. Dispositif selon l'une des revendications 5 à 8, **caractérisé en ce que** ladite pompe d'export (13b) est apte à coopérer avec ladite deuxième conduite d'évacuation de fluide (3d, 13a) et apte à être insérée dans un puits (13) enfoncé au fond de la mer à coté de ladite ancre à succion (11) de ladite première embase (10), de préférence ladite pompe étant apte à être installée à plusieurs mètres en dessous de ladite première embase, de préférence encore ledit puits étant solidaire de ladite ancre à succion.

10. Dispositif selon l'une des revendications 1 à 9, **caractérisé en ce que** lesdits premier réservoir, premier et deuxième collecteurs, dites première, deuxième et troisième conduites sont isolés thermiquement par une même enceinte rigide d'isolation thermique (27) remplie d'eau de mer et en communication avec la mer par au moins un orifice de communication, de préférence avec un dispositif de chauffage (18) de l'eau de mer à l'intérieur de l'enceinte, lesdits orifice de communication et dispositif de chauffage (18) étant de préférence encore situés en partie basse de l'enceinte.

11. Dispositif selon l'une des revendications 1 à 10, **caractérisé en ce qu'**il comprend :
- des pluralités de 3 à 20, de préférence 4 à 12, de dites premières et deuxièmes conduites de séparation et respectivement troisièmes conduites de liaison (20,30,40a), le nombre desdites premières conduites de séparation étant de préférence supérieur ou égal à celui desdites deuxièmes conduites de séparation, et
- des uniques dites conduite d'alimentation de fluide (2a), première conduite d'évacuation de liquide (3₂) et respectivement première conduite d'évacuation de gaz (30b).

12. Procédé de séparation des deux phases liquide et gazeuse d'un fluide à l'aide d'un dispositif selon l'une des revendications 1 à 11, **caractérisé en ce que** l'on réalise les étapes suivantes, dans lesquelles :
1) on envoie le fluide, de préférence du pétrole brut, par l'intermédiaire d'une conduite d'alimentation en fluide (2a), jusqu'audit premier réservoir, et
2) la phase liquide en partie dégazé au moins s'écoule depuis ledit premier réservoir, à travers lesdites premières conduites de séparation (20) pour être dégazé plus avant et descendre vers ledit premier collecteur (20a), puis ladite première conduite d'évacuation de liquide (3₂), et
3) la phase gazeuse comprenant encore éventuellement du liquide s'élève et circule à travers lesdites deuxièmes conduites de séparation (30) vers ledit deuxième collecteur (30a), puis ladite première conduite d'évacuation de gaz (30b) pour permettre la séparation complémentaire de liquide résiduel éventuellement contenu dans la phase gazeuse avant d'être évacuée dans ladite deuxième conduite d'évacuation (3i), et
4) la phase gazeuse provenant de la première conduite de séparation (20) s'élève à travers lesdites troisièmes conduites de liaison verticale (40b) et circule à travers lesdites deuxièmes conduites de séparation vers ledit deuxième collecteur (30) puis vers lesdites première (30b) et dite deuxième conduite d'évacuation de gaz (3i), et
5) la phase liquide provenant de la séparation du gaz dans lesdites deuxièmes conduites de séparation (30), dit deuxième collecteur (30a) et dite première conduite d'évacuation de gaz s'écoule vers ledit premier collecteur (20a) le cas échéant en passant par ledit premier réservoir ou lesdites troisièmes conduites de liaison verticales, avant de rejoindre ladite première conduite d'évacuation de liquide (3₂), et
6) on récupère la phase liquide dégazée à l'extrémité inférieure de ladite première conduite d'évacuation de liquide (3₂) et on l'achemine, par l'intermédiaire d'une dite deuxième conduite d'évacuation de liquide (3d) que l'on remonte jusqu'en surface ou que l'on envoie vers un dispositif de séparation liquide de façon à séparer les différents liquides éventuellement γ contenus, de préférence pour séparer l'huile et l'eau d'un pétrole dégazé, et le cas échéant, un reliquat de gaz encore présent dans un pétrole brut imparfaitement dégazé, et
7) on récupère la phase gazeuse séparée dudit liquide à l'extrémité inférieure de ladite deuxième conduite d'évacuation de gaz (3i) et de préférence on la renvoie en surface ou dans un puits d'injection de gaz au fond de la mer via une dite troisième conduite d'évacuation de gaz (3l).

13. Procédé selon la revendication 12, **caractérisé en ce que** l'on envoie ledit pétrole brut à l'extrémité inférieure dudit premier réservoir, à une pression réduite P1, inférieure à la pression statique au fond de la mer P2, de préférence telle que le différentiel de pressions ΔP = P1-P0, P0 étant la pression en surface, soit supérieur aux pertes de charges dans les deuxièmes conduites d'évacuation de gaz (3l) depuis le fond de la mer jusqu'à la surface.

14. Procédé selon l'une des revendications 12 ou 13, **caractérisé en ce que** l'on exporte le liquide de fluide dégazé depuis le fond de la mer jusqu'en surface à l'aide d'une dite pompe d'export (13c).

15. Procédé selon l'une des revendications 12 à 14, **caractérisé en ce que** l'on contrôle le débit d'arrivée de fluide brut en amont dudit premier réservoir par ladite vanne de contrôle de débit (14c), et/ou on contrôle le débit d'évacuation du fluide dégazé en aval du dit premier collecteur (20a) par la vitesse de ladite pompe d'export (13c) en fonction des mesures au moins d'un dispositif de contrôle du niveau du fluide (6) au sein au moins dudit premier collecteur (20a).

16. Procédé selon l'une des revendications 11 à 15, **caractérisé en ce que** ledit dispositif de séparation est installé au fond de la mer, à une profondeur de 100 à 4 000 m et l'on établit une pression P2 de 10 à 50, de préférence 20 bar (20x10⁵ Pa) au sein desdits premier réservoir et premier et deuxième collecteurs, premières et deuxièmes conduites de séparation et troisièmes conduites de liaison en baissant la pression à l'aide d'un dispositif de baisse de pression (14b) coopérant avec ladite conduite d'arrivée de fluide brut (2d) en amont dudit premier réservoir.

17. Procédé de mise en place au fond de la mer d'un dispositif de séparation selon l'une des revendications 1 à 11, **caractérisé en ce que** l'on réalise les étapes suivantes dans lesquelles :
a) on descend, depuis la surface, un dit dispositif de séparation que l'on pose au fond de la mer, et
b) on ajuste l'horizontalité desdits premier réservoir (2) et premiers et deuxièmes collecteurs (20a, 30a), et l'inclinaison desdites première et deuxième conduites de séparation par actionnement dudit système de vérins (50).

18. Procédé selon la revendication 17 **caractérisé en ce que** l'on met en oeuvre un dispositif tel que défini dans la revendication 6, et on réalise les étapes suivantes dans lesquelles :
a) on descend depuis la surface et on pose ledit dispositif de séparation (1) sur trois embases (10, 10a) de trois ancres a succion (11,11a) enfoncées au fond de la mer, puis
b) on ajuste l'horizontalité de l'axe dudit premier réservoir diffuseur (2) et desdits premier et deuxième collecteurs (20a-30a), par rapport à l'horizontal en actionnant au moins un des vérins (50) à l'aide d'un ROV (52), puis
c) on ajuste l'inclinaison (α, β) desdites premières et deuxièmes conduites de séparation en actionnant les tiges (50a) des deux vérins, d'une même valeur, dans la même direction.

## Patentansprüche

1. Unterwasservorrichtung zur Flüssigkeit/Gas-Trennung von zwei Phasen eines Fluids, die jeweils flüssig und gasförmig sind, insbesondere der flüssigen und gasförmigen Phase eines Rohöls, **dadurch gekennzeichnet, dass** sie ein Gehäuse (1c) umfasst, das geeignet ist, auf dem Meeresboden zu liegen und die folgenden Rohre und Verteiler trägt, die in der folgenden Weise zueinander angeordnet werden können:
a) mindestens ein, vorzugsweise mehrere erste Trennrohre (20), die sich von einem ersten horizontal angeordneten länglichen Behälter (2) mit kreisförmigem Querschnitt erstrecken, mit dem sie stromaufwärts verbunden sind, wobei der erste Behälter (2) vorzugsweise einen größeren Durchmesser aufweist als die ersten Trennrohre (20), wobei die ersten Trennrohre um einen Winkel α von 1 bis 5° in Bezug auf die Horizontale geneigt sind, mit einem Gefälle von dem ersten Behälter zu einem ersten horizontalen zylindrischen Verteiler (20a), mit dem die ersten Rohre stromabwärts verbunden sind, wobei der erste Diffusionsbehälter (2) von mindestens einer Fluidzuführleitung (2a) gespeist wird und der erste Verteiler (20a) mit einer ersten nach unten abfallenden Flüssigkeitsabführleitung (3₂) verbunden ist und vorzugsweise eine Exportpumpe (13c) aufweist, die geeignet ist, die entgaste Flüssigkeit von dem ersten Verteiler (20a) zu entnehmen, und
b) mindestens ein, vorzugsweise mehrere zweite Trennrohre (30), die über den ersten Rohren (20) angeordnet sind und sich von dem ersten Behälter (2) aus und über diesem mit einer Steigung von dem ersten Behälter (2) zu einem zweiten horizontalen zylindrischen Verteiler (30a) erstrecken, wobei die zweiten Trennrohre um einem Winkel β in Bezug auf die Horizontale geneigt sind, der größer als α und vorzugsweise kleiner als 10° ist, wobei der zweite Verteiler (30a) vorzugsweise einen größeren Durchmesser als die zweiten Rohre und einen kleineren Durchmesser als der erste Behälter aufweist, wobei der zweite Verteiler (30a) mit einer ersten Gasabführleitung (30b) verbunden ist, und
c) mehrere dritte vertikale Verbindungsrohre (40a) zwischen jedem ersten Trennrohr (20) und jedem zweiten Trennrohr (30), und
d) ein System von Zylindern (50), vorzugsweise hydraulischen, die es ermöglichen, die Neigung der ersten und zweiten Trennrohre sowie die horizontale Positionierung des ersten Behälters (2), des ersten Verteilers (20a) und des zweiten Verteilers (30a) anzupassen.

2. Vorrichtung gemäß Anspruch 1, **dadurch gekennzeichnet, dass** die erste Gasabführleitung (30b) vom zweiten Verteiler aus bis zum Ende einer zweiten Gasabführleitung (3i) ansteigt, wobei die erste Gasabführleitung (30b) um einen Winkel γ geneigt ist, der größer als α und vorzugsweise kleiner als 10° ist.

3. Vorrichtung gemäß Anspruch 1 oder 2, **dadurch gekennzeichnet, dass** die zweiten Trennrohre stromaufwärts mit dem ersten Behälter (2) jeweils durch eine Vielzahl von zweiten Verbindungsrohren (40b) verbunden sind, die eine größere Neigung als die zweiten Trennrohre aufweisen, vorzugsweise vertikal.

4. Vorrichtung gemäß einem der Ansprüche 1 bis 3, **dadurch gekennzeichnet, dass** der erste Behälter (2) und der erste und zweite Verteiler (20a, 30a) parallel sind und sich die ersten und zweiten Trennrohre in der gleichen Richtung senkrecht zu der Längsrichtung des ersten Behälters und des ersten und zweiten Verteilers erstrecken.

5. Vorrichtung gemäß einem der Ansprüche 1 bis 4, **dadurch gekennzeichnet, dass** sie stromabwärts des ersten Behälters am stromaufwärtigen Ende der ersten Trennrohre (2) Vorrichtungen zur Steuerung der Durchflussrate der Fluidübertragung durch Druckabfall (15) umfasst, vorzugsweise vom Zyklontyp mit tangentialem Eingang (15a) senkrecht zur axialen Richtung der ersten Trennrohre (20) und mit axialem Ausgang in der Achse (XX) der ersten Rohre (2).

6. Vorrichtung gemäß einem der Ansprüche 1 bis 5, **dadurch gekennzeichnet, dass** die Vorrichtung ein Gehäuse (1c) umfasst, das aus einem Trägergestell besteht, das die ersten und zweiten Rohre, den ersten Behälter und die ersten und zweiten Verteiler trägt, wobei das Gehäuse umfasst:
- mindestens eine erste vertikale Säule (60), die an ihrem unteren Ende einen ersten Rahmen (1a) aufweist, der Teile von automatischen Anschlüssen (2b, 3b, 3j) trägt, die mit der Fluidzuführleitung (2a), der ersten Fluidabführleitung (3₂) und der zweiten Gasabführleitung (3i) verbunden sind, wobei der Rahmen in der Lage ist, bei Befestigung mit und auf einer ersten Basis (10), die auf dem Meeresboden verankert ist, zusammenzuarbeiten, und
- mindestens zwei zweite vertikale Säulen (60a), die jeweils an ihrem unteren Ende mit einem vorzugsweise hydraulischen Zylinder (50) ausgestattet sind, wobei die mindestens zwei Zylinder (50) in der Lage sind, mit zweiten, am Meeresboden verankerten Basen (11a) zusammenzuwirken, die sie tragen, wobei die zweiten Säulen so angeordnet sind, dass die Neigung der ersten und zweiten Trennrohre (20, 30) und der ersten Gasabführleitung (30b) durch Betätigung der Zylinder eingestellt und verändert werden kann.

7. Vorrichtung gemäß einem der Ansprüche 1 bis 6, **dadurch gekennzeichnet, dass** sie, wenn sie auf dem Meeresboden (12) installiert ist, eine Fluidzuleitung (2b) umfasst, die geeignet ist, die Verbindung zwischen mindestens einem Ölbohrlochkopf (14) und der Fluidzuführleitung (2a), die an ihrem anderen Ende mit dem ersten Behälter verbunden ist, sicherzustellen, und umfassend stromaufwärts der Zuleitung (2d) des Fluids eine Vorrichtung zur Druckabsenkung (14b) und vorzugsweise ein Fluiddurchflussregelventil (14c).

8. Vorrichtung gemäß den Ansprüchen 6 und 7, **dadurch gekennzeichnet, dass** sie eine erste Basis (10) umfasst, mit der sie verbunden ist, wobei die erste Basis auf dem Meeresboden (12) verankert werden kann, vorzugsweise die erste Basis (10) durch einen ersten Sauganker (11) auf dem Meeresboden verankert werden kann, wobei die erste Basis (10) eine Reihe von männlichen oder weiblichen Teilen automatischer Verbinder (2c, 3c, 3k) jeweils an den Enden der ersten Fluidzuleitung (2d), einer zweiten Abführleitung für entgaste Flüssigkeiten (3d) und einer dritten Gasabführleitung (3l) trägt, die mit den komplementären weiblichen bzw. männlichen Teilen der automatischen Verbinder (2b, 3b, 3j) zusammenwirken, die mit der zweiten Fluidzuführleitung (2a), der ersten Flüssigkeitsabführleitung (3₂) und der zweiten Gasabführleitung (3i) verbunden sind.

9. Vorrichtung gemäß einem der Ansprüche 5 bis 8, **dadurch gekennzeichnet, dass** die Exportpumpe (13b) mit der zweiten Fluidabführleitung (3d, 13a) zusammenwirken kann und in ein am Meeresboden neben dem Sauganker (11) der ersten Basis (10) versenktes Bohrloch (13) eingesetzt werden kann, wobei die Pumpe vorzugsweise mehrere Meter unterhalb der ersten Basis installiert werden kann, wobei das Bohrloch noch bevorzugter mit dem Sauganker fest verbunden ist.

10. Vorrichtung gemäß einem der Ansprüche 1 bis 9, **dadurch gekennzeichnet, dass** der erste Behälter, der erste und zweite Verteiler, das erste, zweite und dritte Rohr durch dieselbe starre Wärmeisolierkammer (27) wärmeisoliert sind, die mit Meerwasser gefüllt ist und mit dem Meer über mindestens eine Verbindungsöffnung, vorzugsweise mit einer Meerwasser-Heizvorrichtung (18) innerhalb der Kammer, in Verbindung steht, wobei die Verbindungsöffnung und die Heizeinrichtung (18) noch bevorzugter in dem unteren Teil der Kammer angeordnet sind.

11. Vorrichtung gemäß einem der Ansprüche 1 bis 10, **dadurch gekennzeichnet, dass** sie umfasst:
- eine Vielzahl von 3 bis 20, bevorzugt 4 bis 12, der ersten und zweiten Trennrohre und jeweils der dritten Verbindungsrohre (20, 30, 40a), wobei die Anzahl der ersten Trennrohre vorzugsweise größer oder gleich derjenigen der zweiten Trennrohre ist, und
- jeweils eine einzelne Fluidzuführleitung (2a), erste Flüssigkeitsabführleitung (3₂) und entsprechende erste Gasabführleitung (30b).

12. Verfahren zur Trennung der beiden flüssigen und gasförmigen Phasen eines Fluids mittels einer Vorrichtung gemäß einem der Ansprüche 1 bis 11, **dadurch gekennzeichnet, dass** die folgenden Schritte durchgeführt werden, in denen:
1) das Fluid, vorzugsweise Rohöl, durch eine Fluidzuführleitung (2a) zu dem ersten Behälter geführt wird, und
2) die zumindest teilweise entgaste flüssige Phase aus dem ersten Behälter zur weiteren Entgasung durch die ersten Trennrohre (20) und hinunter zu dem ersten Verteiler (20a) und dann zu der ersten Flüssigkeitsabführleitung (3₂) fließt, und
3) die Gasphase, die gegebenenfalls noch Flüssigkeit aufweist, steigt und durch die zweiten Trennrohre (30) zu dem zweiten Verteiler (30a), anschließend durch die erste Gasabführleitung (30b) strömt, um eine weitere Abtrennung der in der Gasphase enthaltenen Restflüssigkeit zu ermöglichen, bevor sie in die zweite Abführleitung (3i) abgeführt wird, und
4) die Gasphase von dem ersten Trennrohr (20) durch die dritten vertikalen Verbindungsrohre (40b) ansteigt und durch die zweiten Trennrohre zu dem zweiten Verteiler (30) und dann zu der ersten (30b) und der zweiten Gasabführleitung (3i) fließt, und
5) die flüssige Phase aus der Gastrennung in den zweiten Trennrohren (30), dem zweiten Verteiler (30a) und der ersten Gasabführleitung zu dem ersten Verteiler (20a) gegebenenfalls durch den ersten Behälter oder die dritten vertikalen Verbindungsrohre fließt, bevor die erste Flüssigkeitsabführleitung (3₂) angeschlossen wird, und
6) die entgaste flüssige Phase am unteren Ende der ersten Flüssigkeitsabführleitung (3₂) zurückgewonnen und über eine zweite Flüssigkeitsabführleitung (3d) geleitet wird, die sie an die Oberfläche hoch bringt oder einer Flüssigkeitstrennvorrichtung zuführt, um die verschiedenen darin möglicherweise enthaltenen Flüssigkeiten zu trennen, vorzugsweise um das Öl und das Wasser von einem entgasten Erdöl und gegebenenfalls einem noch in einem unvollständig entgasten Rohöl vorhandenen Gasrückstand zu trennen, und
7) die von der Flüssigkeit getrennte Gasphase am unteren Ende der zweiten Gasabführleitung (3i) zurückgewonnen und vorzugsweise über die dritte Gasabführleitung (3l) an die Oberfläche oder in eine Gaseinleitbohrung auf dem Meeresboden zurückgeführt wird.

13. Verfahren gemäß Anspruch 12, **dadurch gekennzeichnet, dass** das Rohöl mit einem reduzierten Druck P1, der niedriger ist als der statische Druck am Meeresboden P2, zu dem unteren Ende des ersten Behälters geleitet wird, vorzugsweise so, dass die Druckdifferenz ΔP = P1 - P0, wobei P0 der Druck an der Oberfläche ist, größer ist als die Druckverluste in den zweiten Gasabführleitungen (3l) vom Meeresboden bis zur Oberfläche.

14. Verfahren gemäß einem der Ansprüche 12 oder 13, **dadurch gekennzeichnet, dass** die Flüssigkeit des entgasten Fluids mittels der Exportpumpe (13c) vom Meeresboden an die Oberfläche exportiert wird.

15. Verfahren gemäß einem der Ansprüche 12 bis 14, **dadurch gekennzeichnet, dass** die Durchflussmenge des ankommenden Rohfluids vor dem ersten Behälter durch das Durchflussregelventil (14c) gesteuert wird und/oder die Durchflussmenge des abgeführten entgasten Fluids hinter dem ersten Verteiler (20a) durch die Drehzahl der Exportpumpe (13c) in Abhängigkeit von Messungen mindestens einer Fluidniveausteuervorrichtung (6) innerhalb des mindestens ersten Verteilers (20a) gesteuert wird.

16. Verfahren gemäß einem der Ansprüche 11 bis 15, **dadurch gekennzeichnet, dass** die Trennvorrichtung auf dem Meeresboden in einer Tiefe von 100 bis 4.000 m installiert ist und ein Druck P2 von 10 bis 50, bevorzugt 20 bar (20 x 10⁵ Pa) in dem ersten Behälter und den ersten und zweiten Verteilern, den ersten und zweiten Trennrohren und den dritten Verbindungsrohren hergestellt wird, indem der Druck mittels einer Vorrichtung zur Druckabsenkung (14b), die mit der Rohfluidzuleitung (2d) vor dem ersten Behälter zusammenwirkt, gesenkt wird.

17. Verfahren zum Aufstellen einer Trennvorrichtung auf dem Meeresboden gemäß einem der Ansprüche 1 bis 11, **dadurch gekennzeichnet, dass** die folgenden Schritte durchgeführt werden, in denen:
a) eine solche Trennvorrichtung von der Oberfläche abgesenkt und auf den Meeresboden gesetzt wird und
b) die Horizontalität des ersten Behälters (2) und der ersten und zweiten Verteiler (20a, 30a) sowie die Neigung der ersten und zweiten Trennrohre durch Betätigen des Zylindersystems (50) eingestellt werden.

18. Verfahren gemäß Anspruch 17, **dadurch gekennzeichnet, dass** eine Vorrichtung gemäß Anspruch 6 eingesetzt wird und die folgenden Schritte durchgeführt werden, in denen:
a) die Trennvorrichtung (1) von der Oberfläche abgesenkt und auf drei Basen (10, 10a) von drei Saugankern (11, 11a) platziert wird, die in den Meeresboden eingesetzt sind, dann
b) die Horizontalität der Achse des ersten Diffusionsbehälters (2) und des ersten und zweiten Verteilers (20a - 30a) in Bezug auf die Horizontale durch Betätigen mindestens eines der Zylinder (50) mittels eines ROV (52) eingestellt wird, und dann
c) die Neigung (α, β) der ersten und zweiten Trennrohre durch Betätigen der Stäbe (50a) der beiden gleichwertigen Zylinder in die gleiche Richtung eingestellt wird.

## Claims

1. An undersea liquid/gas separator device for separating liquid and gaseous phases of a fluid, in particular liquid and gaseous phases of crude oil, the device being **characterized in that** it comprises a structure (1c) capable of resting on the sea bottom and supporting the following pipes and manifolds suitable for being disposed as follows:
a) at least one and preferably a plurality of first separator pipes (20) extending from a horizontally-extending cylindrical first tank (2) of elongate shape and circular section, the first separator pipes being connected thereto at their upstream ends, said first tank (2) preferably being of diameter greater than the diameter of said first separator pipes (20), said first separator pipes being inclined at an angle α lying in the range 1° to 5° relative to the horizontal with a downward slope from said first tank towards a horizontal first cylindrical manifold (20a) to which said first pipes are connected downstream, said first diffuser tank (2) being fed by at least one fluid feed pipe (2a), and said first manifold (20a) being connected to a first liquid evacuation pipe (3₂) of downward slope, and preferably including downstream an export pump (13c) suitable for drawing said degassed liquid from said first manifold (20a); and
b) at least one and preferably a plurality of second separator pipes (20) disposed above said first pipes (30) from and above said first tank (2) with a rising slope from said first tank (2) towards a horizontal second cylindrical manifold (30a), said second separator pipes being inclined relative to the horizontal at an angle β greater than α, preferably less than 10°, said second manifold (30a) preferably being of diameter greater than the diameter of said second pipes and smaller than the diameter of said first tank, said second manifold (30a) being connected to a first gas evacuation pipe (30b); and
c) a plurality of vertical link third pipes (40a) between each said first separator pipe (20) and each said second separator pipe (30); and
d) a system of preferably hydraulic actuators (50) enabling the inclination of said first and second separator pipes to be adjusted and enabling said first tank (2) and said first and second manifolds (20a, 30a) to be positioned horizontally.

2. A device according to claim 1, **characterized in that** said first gas evacuation pipe (30b) slopes upwards from said second manifold to the end of a second gas evacuation pipe (3i), said first gas evacuation pipe (30b) being inclined at an angle γ that is greater than a, and preferably less than 10°.

3. A device according to claim 1 or claim 2, **characterized in that** said second separator pipes are connected upstream to said first tank (2) via a respective plurality of second link pipes (40b) of slope that is greater than the slope of said second separator pipes and that is preferably vertical.

4. A device according to any one of claims 1 to 3, **characterized in that** said first tank (2) and said first and second manifolds (20a, 30a) are parallel, and said first and second separator pipes extend in the same direction that is perpendicular to the longitudinal direction of said first tank and said first and second manifolds.

5. A device according to any one of claims 1 to 4, **characterized in that** it includes flow rate control devices (15) downstream from said first tank at the upstream ends of said first separator pipes (2), said devices controlling the flow rate of fluid transfer by head loss, preferably being of the cyclone type having tangential inlets (15a) perpendicular to the axial direction of said first separator pipes (20), and axial outlets on the axis (XX) of said first pipes (2).

6. A device according to any one of claims 1 to 5, **characterized in that** the device includes a structure (1c) constituted by a frame of beams supporting said first and second pipes, said first tank, and said first and second manifolds, said structure comprising:
• at least a first vertical pillar (60) having a first frame (1a) at its bottom end, the first frame supporting portions of automatic connectors (2b, 3b, 3j) connected to said fluid feed pipe (2a), to said first fluid evacuation pipe (3₂), and to said second gas evacuation pipe (3i), said frame being suitable for co-operating in fastening with and on a first base (10) anchored to the sea bottom; and
• at least two second vertical pillars (60a) each fitted at its bottom end with a preferably hydraulic actuator (50), the at least two actuators (50) being suitable for co-operating with second bases anchored to the sea bottom (11a) and supporting them, said second pillars being disposed in such a manner as to enable the inclination of said first and second separator pipes (20, 30) and of said first gas evacuation pipe (30b) to be adjusted and varied by actuating said actuators.

7. A device according to any one of claims 1 to 6, **characterized in that** it is installed at the sea bottom (12) and includes a fluid delivery pipe (2b) suitable for providing a connection between at least one head of an oil well (14) and said fluid feed pipe (2a) connected to said first tank at its other end, and including a pressure-reducer device (14b) and preferably a fluid flow rate control valve (14c) upstream from said delivery pipe (2d) for said fluid.

8. A device according to claims 6 and 7, **characterized in that** it is connected to a first base (10) suitable for being anchored to the sea bottom (12), said first base (10) preferably being suitable for being anchored to the sea bottom by a first suction anchor (11), said first base (10) supporting a series of male or female portions (2c, 3c, 3k) of automatic connectors respectively at the ends of said first fluid delivery pipe (2d), of a second degassed liquid evacuation pipe (3d), and of a third gas evacuation pipe (3ℓ), co-operating with the complementary female or male portions respectively (2b, 3b, 3j) of the automatic connectors connected to said second fluid feed pipe (2a), to said first liquid evacuation pipe (3₂), and to said gas evacuation pipe (3i).

9. A device according to any one of claims 5 to 8, **characterized in that** said second fluid evacuation pipe (3d, 13a) is suitable to co-operate with a said export pump (13b) suitable for being inserted in a well (13) buried in the sea bottom beside said suction anchor (11) of said first base (10), said pump preferably being suitable for being installed several meters below said first base, more preferably said well being secured to said suction anchor in order to be evacuated to the surface (13a).

10. A device according to any one of claims 1 to 9, **characterized in that** said first tank, said first and second manifolds, and said first, second, and third pipes are thermally insulated by a common rigid thermal-insulation enclosure (27) filled with sea water and in communication with the sea via at least one communication orifice, preferably including a heater device (18) for heating sea water inside the enclosure, said communication orifice and said heater device (18) more preferably being situated in the bottom portion of the enclosure.

11. A device according to any one of claims 1 to 10, **characterized in that** it comprises:
• pluralities of 3 to 20 and preferably 4 to 12 of said first and second separator pipes and respectively of said link third telemeters (20, 30, 40a), the number of said first separator pipes preferably being greater than or equal to the number of said second separator pipes; and
• a single said fluid feed pipe (2a), a single said first liquid evacuation pipe (3₂), and a single said first gas evacuation pipe (30b).

12. A method of separating liquid and gaseous phases of a fluid using a device according to any one of claims 1 to 11, the method being **characterized in that** the following steps are performed:
1) sending the fluid, preferably crude oil, via a fluid feed pipe (2a) to said first tank; and
2) allowing the at least partially degassed liquid to flow from said first tank via said first separator pipe (20) in order to be further degassed and to move down towards said first manifold (20a), and then to said first liquid evacuation pipe (3₂); and
3) allowing the gaseous phase, possibly still containing liquid, to rise and flow via said second separator pipes (30) towards said second manifold (30a), and then towards said first gas evacuation pipe (30b) in order to allow additional separation of any residual liquid contained in the gaseous phase prior to being evacuated via said second evacuation pipe (3i); and
4) allowing the gas phase from the first separator pipe (20) to rise through said vertical link third pipes (40b) and flow via said second separator pipes towards said second manifold (30) and then towards said first and second gas evacuation pipes (30b, 3i); and
5) allowing the liquid coming from gas separation in said second separator pipes (30), said second manifold (30a), and said first gas evacuation pipe to flow towards said first manifold (20a), where appropriate by passing via said first tank or said vertical link third pipes prior to rejoining said first liquid evacuation pipe (3₂); and
6) recovering the degassed liquid phase from the bottom end of said first liquid evacuation pipe (3₂) and taking it via a said second liquid evacuation pipe (3d) that is taken to the surface or sent to a liquid separator device in order to separate the different liquids possibly contained therein, preferably in order to separate the water and the oil of degassed oil, and where appropriate any remaining gas still present in imperfectly degassed crude oil; and
7) recovering the gas phase separated from said liquid from the bottom end of said second gas evacuation pipe (3i) and preferably sending it to the surface or into a well for injecting gas into the sea bottom via a said third gas evacuation pipe (3ℓ).

13. A method according to claim 12, **characterized in that** said crude oil is sent at the bottom end of said first tank at a reduced pressure P1, less than the static pressure P2 at the sea bottom, preferably such that the pressure difference ΔP = P1-P0, where P0 is the pressure at the surface, is greater than the head losses in the second gas evacuation pipes (3ℓ) from the sea bottom to the surface.

14. A method according to claim 12 or claim 13, **characterized in that** the liquid of the degassed fluid is exported from the sea bottom to the surface with the help of a said export pump (13c).

15. A method according to any one of claims 12 to 14, **characterized in that** the delivery flow rate of the crude fluid is controlled upstream from said first tank by said flow rate control valve (14c), and/or the evacuation flow rate of the degassed fluid is controlled downstream from said first manifold (20a) by the speed of said export pump (13c) as a function of measurements from at least one device for monitoring the level of the fluid (6) within at least said first manifold (20a).

16. A method according to any one of claims 11 to 15, **characterized in that** said separator device is installed on the sea bottom at a depth lying in the range 100 m to 4000 m, and a pressure P2 lying in the range 10 bars to 50 bars, and preferably equal to 20 bars (20×10⁵ Pa) within said first tank and said first and second manifolds and said first and second separator pipes and said link third pipes by lowering the pressure by means of a pressure-reducer device (14b) co-operating with said crude fluid delivery pipe (2d) upstream from said first tank.

17. A method of placing a separator device according to any one of claims 1 to 11 on the sea bottom, the method being **characterized in that** the following steps are performed:
a) lowering a said separator device from the surface and placing it on the sea bottom; and
b) adjusting the horizontality of said first tank (2) and of said first and second manifolds (20a, 30a), and the inclination of said first and second separator pipes by actuating said system of actuators (50).

18. A method according to claim 17, **characterized in that** a device as defined in claim 6 is used, and the following steps are performed:
a) said separator device (1) is lowered from the surface and placed on three bases (10, 10a) constituted by three suction anchors (11, 11a) buried in the sea bottom; then
b) the horizontality of the axes of said first diffuser tank (2) and of said first and second manifolds (20a-30a) are adjusted relative to the horizontal by actuating at least one of the actuators (50) by means of an ROV (52); then
c) the inclinations (α, β) of said first and second separator pipes are adjusted by actuating the rods (50a) of two actuators by the same amount in the same direction.
